# EUROPEAN PATENT APPLICATION

(11) **EP 2 602 854 A1**
(43) Date of publication of application: **12.06.2013**
(21) Application number: 11192079.9
(22) Date of filing: 06.12.2011
(51) Int. Cl.: H01M 8/04, H01M 8/24, H01M 8/00

(54) **Fuel cell recovery time system**

(71) Applicant: Research In Motion Limited, Waterloo, ON N2L 3W8 (CA)
(72) Inventor: Rich, David Gerard, West Bloomfield, Michigan 48322 (US); Wu, Chee-Ming Jimmy, Waterloo, Ontario N2L 3W8 (CA)
(74) Representative: Moore, Barry

(57) **Abstract**

The disclosure is directed at a fuel cell recovery time system for a mobile communication device including a battery for supplying power to the mobile communication device when the device is in a stand-by mode; a fuel cell element including at least two fuel cells, one of the at least two fuel cells being always on and the remaining fuel cells being off in the stand-by mode; wherein the one of at least two fuel cells generates heat to improve operating conditions for the remaining fuel cells in the fuel cell element when the device enters an active mode.

## Description

### FIELD OF THE DISCLOSURE

The disclosure is directed at the use of fuel cells and more specifically at a fuel cell recovery time system.

### BACKGROUND OF THE DISCLOSURE

The use of fuel cells as a power source for portable electronic devices— such as mobile communication devices (such as cellular phones or smart phones), MP3 music players, remote controls, electronic navigation devices (such as Global Positioning System devices), portable DVD players, personal digital assistants (PDAs) or portable computers (such as tablet computers or laptop computers)—may present several challenges. The opportunity to have a portable electronic device that does not require a power cord for recharging provides one which can be seen as a greener or more autonomous alternative to current options. However, there are still some issues relating to the use of fuel cells within mobile communication devices, and portable devices in general which need to be addressed before they find wide spread acceptance as a primary power source.

For instance, fuel cells become more difficult to start when they have been idle for long periods of time. This can be problematic if a portable device is inoperable, or not ready for immediate use, when required by a user, especially during an emergency situation.

### SUMMARY OF THE DISCLOSURE

The current disclosure is directed at a fuel cell recovery time system. The system is used to reduce the time required for a set of, at least two, fuel cells, to start up or to reduce the fuel inefficiency of the set of fuel cells, during the start up process. The system includes at least one fuel cell which acts as a heater for the other fuel cells in the set of fuel cells, or fuel cell bulk, in order to maintain a minimum ambient temperature surrounding the set of fuel cells so that when power is required, the set of fuel cells are not starting from a cold start and operating under more desired operating conditions.

In one aspect, there is provided a fuel cell recovery time system for a portable electronic device comprising a battery for supplying power to the portable electronic device when the device is in a stand-by mode, and a fuel cell element including at least two fuel cells, one of the at least two fuel cells being activated and the remaining fuel cells being off in the stand-by mode, wherein the one of the fuel cells generates heat to improve operating conditions for the remaining fuel cells in the fuel cell element.

### BRIEF DESCRIPTION OF THE DRAWINGS

Embodiments of the present disclosure will now be described, by way of example only, with reference to the attached Figures, wherein:

Figure 1 is a graph outlining start up times in relation to power provided for different fuel cells;

Figure 2 is a schematic diagram of components within a portable electronic device;

Figure 3 is a schematic diagram of a system for fuel time recovery; and

Figure 4 is a schematic diagram of another embodiment of a system for fuel time recovery.

### DETAILED DESCRIPTION

The disclosure is directed at a system for improving fuel cell recovery time. In general, fuel cell recovery (or startup after a period of disuse) can take a long period of time depending on the fuel cell technology and surrounding environment conditions. In some cases, fuel cells can take 10 to 15 minutes to reach full power and up to several hours if started from a very cold ambient temperature. For a user of a fuel-cell-powered portable electronic device, the time for bringing a fuel cell up to a full or practical power level may pose an undesirable delay. Additionally, as fuels cells provide power on an as needed basis and since usage of many portable electronic devices is intermittent (they may be heavily used in one time interval, then be idle or little-used in another time interval, and the intervals of heavy or little use might not be readily foreseeable), constant starting and stopping may also represent fuel-use inefficiency, long-term reliability concerns, or both. During startup, fuel efficiency is at its poorest since it is generally operating under non-ideal operation conditions. In general, the system described herein may reduce the inefficiency and improve the reliability. Another advantage of the system is that it may improve long-term reliability of the fuel cell or fuel cells.

The system includes a set of at least two fuel cells that may be started up on demand. The portable electronic device in which the system is integrated may have other power sources, such as a battery or hybrid battery. Generally speaking, a hybrid battery may combine a battery that stores energy chemically with another energy storage element, such as a capacitor or a battery with a different chemistry or a battery having different characteristics. For simplicity, such power sources may be referred to herein as a "battery." The battery may be rechargeable. When a device processor determines that a power source within the device almost requires re-charging, or is close to being unable to handle the power demand of the device, the set of fuel cells may be started up in order to provide (that is, supply) power, to the power source or to other functions of the device, or to both. The system may also include a heating element that may assist in controlling, or managing, the fuel cell operating characteristics in order to provide a more beneficial working environment for the fuel cell. In the current disclosure, the use of the term "fuel cell" will also represent the "set of fuel cells".

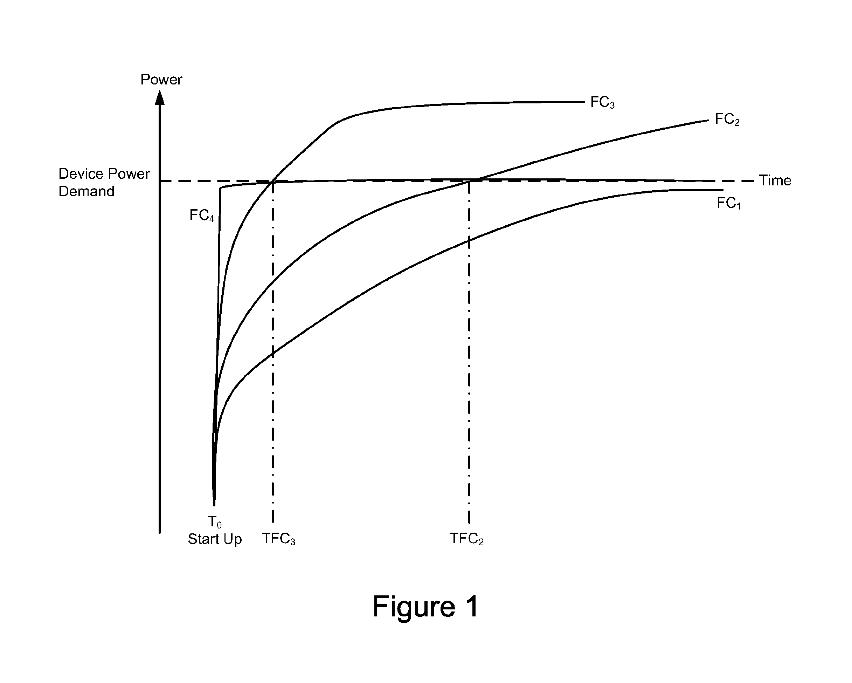

Turning to Figure 1, a graph with power on the y-axis and time on the x-axis is shown. This graph is used to illustrate relationships between time and power when a fuel cell is initially powered up to when it reaches a steady state of power provision. The charting assumes that the fuel cell has been idle for an extended period of time. Although the graph represents the types of information learned via experimentation, the graph is for illustration and explanation purposes and not meant to reflect the graphing for any specific fuel cell or fuel cell technology and is directed at a set of fuel cells rather than an individual fuel cell. In some embodiments, multiple fuel cells may be required to match the power demand of the device.

In the figure, a broken horizontal line, reflecting a power demand of the portable device is shown as a reference. The level of power demand for a portable device may vary depending on what applications are being executed (and as will be discussed below, the level of power demand may differ when the device is in an active mode or a stand-by mode); however, there is typically an estimated maximum power demand level (not shown in Figure 1) that may be selected during the manufacturing stage so that the power level of the battery and the fuel cell can be appropriately selected. A processor may be configured to monitor or sense the power demand (in general, if a component is configured to perform a function, that component is capable of carrying out that function). Instead of relying on the battery to power the device components, power from the set of fuel cells may be used, which improves system energy and also the re-charging time for the battery.

In one embodiment, the powering of the device may be more efficient when the device is powered via the battery and the fuel cell is used as a backup or for low-power activities. The fuel cell may also be used for re-charging the battery when it is determined that re-charging is required. In an alternative embodiment, the fuel cell may be the main power source after it has fully powered up, or started, and the battery serves as the main power source until then. Each one of the representative fuel cell lines shown and discussed below can relate to multiple fuel cells entities and not an individual fuel cell.

In the graph of Figure 1, the curve labeled Fuel Cell One (FC1) reflects a fuel cell, or set of fuel cells, that starts up at To and has a small boost in initial power before following a generally well defined arc as the power level plateaus over time to almost match with the power demand of the device. In some cases, this can take minutes or even hours, depending on the operating conditions (including environmental conditions such as temperature and humidity) surrounding the fuel cell. As will be understood, different fuel cells have different desired operating conditions relating to, but not limited to, relative humidity or temperature requirements. The environment around the fuel cells may be comparable to, but is not necessarily comparable to, the environment around the device as a whole. As will be discussed below, however, the environment around the fuel cells may be affected by one or more of the fuel cells. As a result, the temperature and humidity that may have the more substantial effect on the fuel cells need not be the same as or comparable to the temperature and humidity around the device. When using this fuel cell, there may be a lot of "waste" or reliance on the battery to power until FC1 reaches the power demand of the device. This is reflected in the space (which is roughly triangular and may be referred to as a "triangle"), bounded by the To line (not shown expressly in Figure 1), the device power demand line and the curve of FC1. In some case, the battery may be used to provide heat to the fuel cell to improve operating conditions.

The curve for Fuel Cell Two (FC2) reflects a fuel cell, or set of fuel cells, that starts up at To and has a boost in initial power before following a generally well-defined arc as the power level provided by the fuel cell surpasses the power demand of the device at time T_{FC2}. Once again, there is a "triangle" of waste which is bounded by the To line, the system demand line and the curve of the FC2. Furthermore, after time T_{FC2}, there is surplus energy or power being produced by the fuel cell so the excess power may be grounded, shunted, managed or regulated by a power management integrated circuit (PMIC). Alternatively, the fuel cell may be used to power the device, and the excess power may be used to re-charge the battery. In this embodiment, the properties of the fuel cell can be designed to provide an output equal to the maximum, power demand of the device, however it may not always be possible.

The curve for Fuel Cell Three (FC3) reflects a fuel cell, or fuel cell set, that starts up at To and has a large boost in initial power and then quickly surpasses the power demand of the device at time T_{FC3.} As can be seen from Figure 1, the "triangle" of waste typically continues to decrease if the fuel cell can initiate a large boost in initial power when it is started. The faster that the output of the fuel cell can reach the power demand of the device, the less power that is required to be supplied by the battery. However, this factor may be controlled depending on the portable device and the powering system, as will be described below. There may be a fuel cell inefficiency as there is more power than required and each fuel cell is starting from the cold start and therefore fuel may be wasted. Once again, the excess power being created by FC3 may be controlled or shunted. While it may be desirable to waste less power, it may also be undesirable to overpower a device.

In Figure 1, the curve for Fuel Cell Four (FC4) reflects an "ideal" fuel cell, or fuel cell set, which starts up at To and has a boost right up to the device demand level and then plateaus and matches the device demand so that there is no requirement to shunt excess power. As can be seen, there is essentially no "triangle" of waste as FC4 can immediately replace the power being supplied by the battery and therefore, in this embodiment, the battery can idle once the fuel cell starts up. Furthermore, there is little or no fuel inefficiency as there is little or no waste or excess power being generated by the fuel cell. However, there may be some inefficiency if the fuel cell starts from a cold start.

This inefficiency can be reduced by providing a heated environment within which the fuel cell starts, as will be described herein below.

In order to increase the initial boost, multiple fuel cells may be used and their power stacked together to provide the boost (along the line To). Alternatively, a larger initial boost can be experienced if the fuel cell is not started from a cold start, where the fuel cell is already warmed or operating within more favorable operating conditions such as a warm ambient surrounding. As will be discussed, the ambient surroundings for the fuel cells may be comparable to, but need not be comparable to, the surroundings around the device as a whole.

In this manner, by designing a fuel cell, or fuel cell set, such that it has multiple fuel cell elements that could be turned on and off separately, an improvement in the initial power generated may be realized. Getting to peak power faster also represents an enormous system advantage for the fuel cell and the device as the waste "triangle" is decreased.

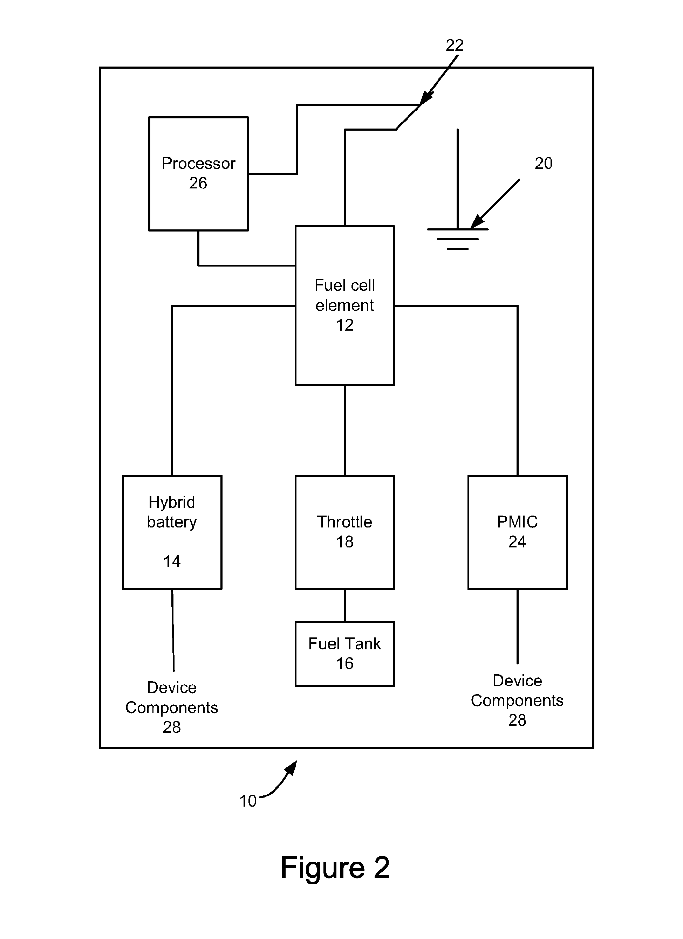

Turning to Figure 2, a schematic diagram of an illustrative portable electronic device 10 including a system for fuel cell time recovery is shown. In some embodiments, the portable device may be sized to be held or carried in a human hand, which allows the portable electronic device to be labeled a handheld device. The portable electronic device 10 may include any number of components not depicted explicitly in Figure 2, such as a wireless transmitter or receiver, a microphone, a speaker, one or more input/output devices, a display screen and an indicator lamp. The portable electronic device 10 may be, for example, a smart phone, an electronic navigation device or a portable computer. In general, the demands of the portable electronic device 10 may change as a function of the usage by a user as well as the functions in operation (e.g., the device may consume more power when engaging in wireless communication than when not doing so). The various components may all be physically coupled to one another, and may be physically coupled directly or via one or more intermediate elements, such as a housing (not shown) that may give the device some structural integrity.

The device 10 includes a set of at least two, fuel cells, or a fuel cell bulk seen as the fuel cell element 12, which serves as one possible power supply for the portable device 10 when it is in an active mode. An active mode is the way the device 10 operates when it is in active use or is actively being used by a user, and when the power demands of the device 10 are generally high. A device may have one or more active modes, with different levels of demanded power. A battery, such as a hybrid battery 14, is also located within the device which also supplies power to device components 28 when the device is in the active mode. Either power source may also be used to power the device when the device is in an inactive, or stand-by mode. A stand-by mode is the way the device 10 operates when it is not in active mode, and the power demands are generally low, or lower than in the active mode. A device may have one or more stand-by modes, and a stand-by mode may include (for example) deactivating some device functionality, powering down the device, slowing down processing speed, turning off the device or otherwise operating in ways to conserve power.

In one embodiment, the hybrid battery 14 serves as the power source for the device until it is determined that the battery requires re-charging or if the power demand of the device may be higher than the power being able to be provided by the battery 14.

The hybrid battery 14 is also used to power the device while the set of fuel cells start up in order to power the device until the power generated by the set of fuel cells matches or surpasses the power demand of the device 10. The set of fuel cells 12 is operatively connected to a fuel tank 16, such that the tank 16 can supply fuel to the set of fuel cells 12. Operative connection means that the components are connected physically or electronically or mechanically or otherwise so that they can operate in concert. As depicted in Figure 2, the fuel tank 16 is operatively connected to a throttle 18, which in turn is operatively connected to the fuel cell element 12. The throttle 18 controls the amount of fuel being supplied to the set of fuel cells 12 by the fuel tank 16. Alternatively, the flow of fuel can be controlled by microfluidics.

The set of fuel cells 12 is also connected to ground 20 via a switch 22 or to a power management integrated circuit (PMIC) 24 such as a DC/DC converter. Opening and closing of the switch 22 can be controlled by a processor 26, which determines whether the power generated by the set of fuel cells 12 may be shunted to ground since there is excess power being generated or if the excess power may be used to re-charge the battery or to power up device components 28, which may be done via, but need not necessarily be done via, the PMIC 24. Similarly, the PMIC 24 can function to control the power output (or the voltage or current output) of the set of fuel cells to (for example) ground the output (if there is excess power, for example) or to regulate and then deliver the power to the device components 28, or a combination of both.

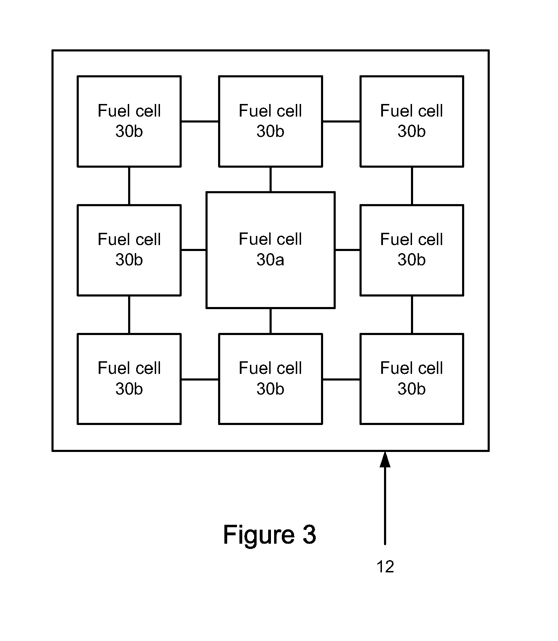

Turning to Figure 3, a schematic diagram of the set of fuel cells 12 is shown. In the current example, the set of fuel cells 12, providing a system for fuel cell recovery, includes nine individual fuel cells 30 but any number of fuel cells can be used to produce the fuel cell bulk with one constraint being the space available for such an element within the system, and more specifically the portable device. Alternatively, the number of fuel cells may be determined by the amount of power that can be generated by each included fuel cell and an estimation or knowledge of the maximum power demand of the device.

In one embodiment, if one of the fuel cells 30, such as the central fuel cell 30a, stays on or is able to transmit heat on a continual basis (that is, the central fuel cell is always on), it is able to affect the ambient temperature, and possibly the relatively humidity, surrounding the remaining fuel cells 30b in the set of fuel cells to provide operating conditions which are closer to the ideal or desired operating conditions for the fuel cells 30b when power is required by the device. The feature of the fuel cell 30a being always on is not necessarily the same as saying that the fuel cell 30a can never under any circumstances be deactivated or turned off. Rather, fuel cell 30a is continually active in that fuel cell 30a stays active when the device is in one or more stand-by modes, in which a user may demand that the device go relatively quickly into an active mode. In some embodiments, for example, a user may command a complete power-down of the device, in which fuel cell 30a may be deactivated (along with all or almost all other components of the device). While fuel cell 30a may be continually on, the remaining fuel cells 30b may be deactivated or off, especially if the device is in a stand-by mode, but may be called upon to start up if the device enters an active mode. Further, the fuel cell 30a may be deemed as activated or "always on" when the fuel cell 30a is capable of supplying power on demand or on short notice, whether the fuel cell 30a is actually supplying power or not.

Because of the continual operation of the central fuel cell 30a, the remaining fuel cells 30b may not have to start from a "cold start," thereby also improving fuel cell efficiency. In other words, the central fuel cell 30a serves as a heater, generating heat that is conveyed (by any combination of convection, conduction or radiation) to the remaining fuel cells 30b. The heat may also be used to generate a faster startup (higher initial boost), prevent icing (improve operating conditions) for the remaining fuel cells 30b within the fuel cell element 12. The size of the central fuel cell 30a (or the heating fuel cell) can be determined by the heat needed and the efficiency required of the fuel cell element. The power that is being generated by the central fuel cell 30a is preferably used to charge the battery but may also be used to power certain device components.

As will be understood, the individual fuel cells 30b can be turned on and off independently so that the amount of power generated by the fuel cell element can be controlled by the processor 26 in order to limit the amount of excess power with respect to device power demand. In other words, the processor can control each of the fuel cells independently.

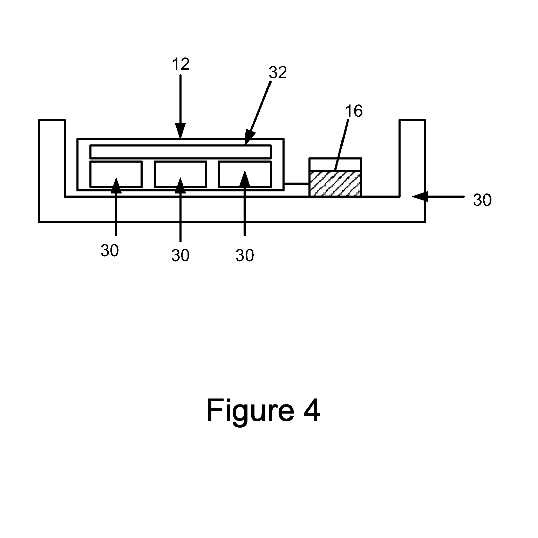

As shown in the cut away view of Figure 4, a further embodiment of a fuel cell element is shown. Within the fuel cell element 12 are the individual fuel cells 30 and a heat spreader 32. Although shown as being integrated within the fuel cell element 12, the heat spreader 32 may be an independent component. In general, the heat spreader distributes heat (e.g., via conduction) to one or more fuel cells. In a typical implementation, the heat from the central fuel cell 30a is conveyed (e.g., via convection, conduction or radiation) to the heat spreader, which distributes or conveys the heat to the other fuel cells 30b. The heat spreader may help increase the temperature within the fuel cell element 12, thereby improving the operating conditions for the individual fuel cells 30b at start up. In an alternative embodiment, the heat spreader may itself be a heating element (or receive heat from a heating element not shown in Figure 4), which can provide heat to improve operating conditions. In one embodiment, the heat spreader 32 is a copper plate, having high thermal conductivity and may have an insulator on the side away from the set of fuel cells depending on how or where it is located within the fuel cell element 12 or device 10. The heat spreader 32 may be proximate to one or more fuel cells, and may be in direct physical contact with one or more fuel cells.

Furthermore, the size of the central fuel cell 30a should be selected to provide adequate heat for the fuel cell element 12, or other fuel cells 30b within the set of fuel cells, and small enough to trickle charge the battery without overcharging or to waste fuel. Any one of the fuel cells 30 in the fuel cell element 12 can serve as the heater.

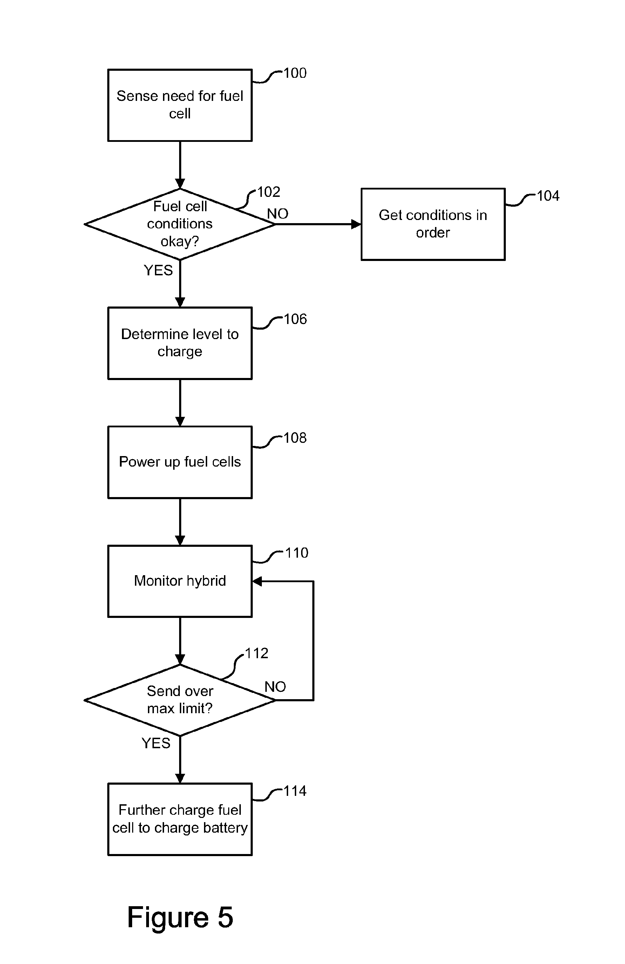

As schematically shown in the flow chart of Figure 5, one method of improving fuel cell recovery time is shown. In this example, it is assumed that either the central fuel cell 30a is currently in operation or the heating element is on such that the fuel cell operating conditions are being controlled and are maintained in an ideal range or reasonably close to it. Alternatively, as part of its normal operation, the processor 26 may monitor the fuel cell operating conditions such as, but not limited to, the temperature and the relative humidity surrounding the fuel cell element (which, it bears repeating, may be but need not be comparable to the temperature or humidity surrounding the device as a whole), to determine if heating is beneficial in order to maintain good (generally, as close to ideal as feasible) operating conditions for the fuel cells 30. In general, the processor 26 may monitor or sense environmental conditions via one or more sensors, such as a temperature sensor or a humidity sensor. A typical sensor generates a signal as a function of the condition to which the sensor is sensitive (e.g., temperature or humidity) and supplies the signal to the processor 26. The sensors may be deployed anywhere and in any fashion.

In operation, the processor 26 of the portable device 10 continually monitors the device to determine 100 if there is a need to start up the fuel cells 30 within the fuel cell element 12. As disclosed above, based on device power demand, any number of the fuel cells may be started and not necessarily all of them at once.

In one example, the processor can determine that the fuel cells ought to be started because the state of charge, or remaining charge level, of the battery is nearing a threshold, or passed a threshold. In another example, the processor may start a certain number of fuel cells after determining that the power demand of the device has suddenly increased to a higher level. While the battery may be able to handle the new power demand, this also indicates that it will discharge more quickly.

Once the processor determines that fuel cells need to be started, the processor may check to determine 102 if the fuel cell operating conditions are in an acceptable range. An acceptable range may be short of ideal, but is a satisfactory range that may vary depending upon fuel cells or their configuration. An acceptable range may also comprise acceptable ranges of temperature and humidity, individually or together. In general, an acceptable range is one in which the operating conditions favor starting one or more fuel cells. It is possible that, in some configurations, one fuel cell may be in an acceptable range and another fuel cell may not be in an acceptable range, or may not yet be in an acceptable range.

By starting the fuel cells within ideal operating conditions or acceptably close to ideal, the efficiency of the fuel cells is increased, as outlined above. Therefore, if the operating conditions are not in an acceptable range, the processor proceeds to get the operating conditions in order 104 such as by activating the heating element or starting the central fuel cell or by reducing the temperature or relatively humidity surrounding the fuel cells. In an example in which it is assumed that (for example) one fuel cell is within acceptable operating conditions and others are not, the processor may power up the fuel cell that has acceptable operating conditions. In another example, in which it is assumed that the fuel cells are all or mostly within acceptable operating conditions, the processor determines the level of charge that is required by the device 106. Colloquially, in the event several fuel cells could reasonably be powered up, the processor determines whether it is prudent to power up (or start up) all, or power up some. This determination may take into account many factors.

This level of charge may relate to or be a function of the power demand of the device or may relate to the maximum power demand of the device or even a value that is less than the power demand of the device. As previously noted, the processor may be configured to sense the power demand, and may activate one or more fuel cells as a function of or in response to the sensed power demand. In general, the greater the power demand, the more fuel cells might be started up. Another consideration, which may be taken into account separately or in combination with the power demand, is whether another power supply, such as the battery, could be recharged. Due to the characteristics of certain fuel cells, it may be more beneficial to power up the fuel cells for use as a re-charging mechanism as it may be preferred that the battery power the device components and therefore, there is no need for excess power to be generated.

I n one case, the level of charge may be selected such that it is beneath the power demand of the device and simply used to re-charge the battery. This level may then be updated accordingly by starting more fuel cells or by stopping some.

After determining the level of charge, the processor determines the number of fuel cells to start and then transmits a current to the fuel cells to activate them (or "power them up") 108. The processor may be configured to activate fuel cells by, for example, transmitting a control signal to the fuel cell or another component that causes the activation. The state of charge or the power demand of the device is continually monitored 110 and the processor determines if there is a need to increase the device power demand 112. If there is no need, the processor continues to monitor the state of charge of the battery or the power demand of the device. This may be beneficial if the state of charge of the battery is almost drained or if the processor determines that powering of the device should be by the fuel cells while the battery is being re-charged by the excess power generated by the fuel cells.

If it is determined that the power level being generated by the fuel cells needs to be increased, the processor starts other fuel cells within the fuel cell element or set of fuel cells. As some of the other fuel cells are already operational, the heat generated by those fuel cells may assist in providing ideal operating conditions for the other ones so that the other ones do not have to perform a cold start which reduces the efficiency of the fuel cells.

After increasing the power generated by the fuel cells, the processor may determine how to use or store this power. Various options have been listed above.

In the preceding description, for purposes of explanation, numerous details are set forth in order to provide a thorough understanding of the embodiments of the disclosure. However, it will be apparent to one skilled in the art that some or all of these specific details may not be required in order to practice the disclosure. In other instances, well-known electrical structures and circuits are shown in block diagram form in order not to obscure the disclosure. For example, specific details are not provided as to whether the embodiments of the disclosure described herein are as a software routine, hardware circuit, firmware, or a combination thereof.

The above-described embodiments of the disclosure are intended to be examples only. Alterations, modifications and variations can be effected to the particular embodiments by those of skill in the art without departing from the scope of the disclosure, which is defined solely by the claims appended hereto.

## Claims

1. A fuel cell system for a portable electronic device comprising:
a battery for supplying power to the portable electronic device when the device is in a stand-by mode; and
a fuel cell element including a first fuel cell and a second fuel cell, the first fuel cell being activated and the second fuel cell being off when the portable electronic device is in the stand-by mode;
wherein the first fuel cell generates heat that is conveyed to the second fuel cell.

2. The fuel cell system of Claim 1 further comprising a heat spreader that receives heat from the first fuel cell and conveys the heat to the second fuel cell.

3. The fuel cell system of Claim 1 or 2 further comprising:
a fuel tank operatively connected to the fuel cell element.

4. The fuel cell system of Claim 3 further comprising a throttle operatively connected to the fuel cell element and the fuel tank, the throttle configured to control a flow of fuel from the fuel tank to the fuel cell element.

5. The fuel cell system of any preceding Claim further comprising a power management integrated circuit (PMIC) connected to an output of the fuel cell element for regulating the output of the fuel cell.

6. The fuel cell system of Claim 5 wherein the PMIC is a DC/DC converter.

7. The fuel cell system of any preceding Claim further comprising a processor, the processor configured to sense a power demand and to activate the second fuel cell as a function of the power demand.

8. The fuel cell system of Claim 7 wherein the processor is configured to sense an environmental condition surrounding the second fuel cell, and to activate the second fuel cell as a function of the sensed environmental condition,
wherein the environmental condition comprises at least one of temperature and humidity.

9. A portable electronic device comprising:
a fuel cell element comprising a first fuel cell and a second fuel cell, the first fuel cell being activated;
a fuel tank operatively connected to the fuel cell element;
a processor, wherein the processor is configured to sense a power demand and to activate the second fuel cell as a function of the sensed power demand.

10. The portable electronic device of Claim 9, wherein the portable electronic device is one of a smart phone and a portable computer.

11. A method in a device having a first fuel cell and a second fuel cell, the first fuel cell being activated and the second fuel cell being off, the method comprising:
sensing a power demand of a portable electronic device;
sensing an environmental condition surrounding the second fuel cell;
activating the second fuel cell as a function of the power demand and the environmental condition.

12. The method of Claim 11 further comprising:
activating a heating element after sensing the environmental condition.

13. The method of Claim 11 or 12 further comprising:
determining if further fuel cells should be activated as a function of the power demand and the environmental condition.

14. The method of Claim 13 further comprising:
activating the further fuel cells.
